# EUROPEAN PATENT SPECIFICATION

(11) **EP 3 900 403 B1**
(45) Date of publication and mention of the grant of the patent: **24.06.2026**
(21) Application number: 18943391.5
(22) Date of filing: 21.12.2018
(51) Int. Cl.: H04W 4/20, H04W 4/14, H04M 15/00

(54) **METHOD AND APPARATUS FOR SERVICE USAGE AWARE BALANCE INQUIRY**
VERFAHREN UND VORRICHTUNG ZUR DIENSTNUTZUNGSBEWUSSTEN BILANZABFRAGE
PROCÉDÉ ET APPAREIL D'INTERROGATION DE SOLDE SENSIBLE À L'UTILISATION DE SERVICE

(43) Date of publication of application: 27.10.2021
(73) Proprietor: Telefonaktiebolaget LM Ericsson (publ), 164 83 Stockholm (SE)
(72) Inventor: OPPILAMANI, Ramanathan, Velachery (West) 600042 (IN)
(74) Representative: Ericsson
(86) International application number: PCT/IN2018/050866
(87) International publication number: WO 2020/129074

(56) References cited:
- EP-A1- 2 755 410
- WO-A2-2008/029231
- US-A1- 2012 101 952
- US-A1- 2014 302 825
- US-B2- 8 976 947

## Description

### Technical Field

The present invention relates to wireless communication networks and particularly relates to account-balance inquiries for wireless services.

### Background

Account-balance inquiries provide users of communication services, such as prepaid services, the ability to determine the amount of credit remaining in their accounts. While knowing the credit balance remaining in his or her account provides a user with some sense of whether or when to replenish the account, it is recognized herein that merely knowing the balance provides the user with little practical insight into the amount or extent of service usage available to the user, in view of the remaining balance.

US 2012/101952 A1 describes a system and method for providing user notifications. A process includes storing on an end user device (EUD) one or more notification actions corresponding to one or more notification requests, the EUD being associated with a service plan having a network service usage limit. WO 2008/029231 A2 describes service availability update for a user having a prepaid account at a service provider capable of providing one or more services over a communications network. In US 2014/302825 a system and method for providing ussd services using cross-operator number is described. EP 2755410 A1 describes displaying icons according to service usage states and mobile terminal supporting the same US 8976947 B2 describes a communication platform and related communication method using the platform

### Summary

Conventional balance inquiries by a prepaid customer or other communication-service subscriber do not return an available service amount. Rather, they return a monetary amount that does not consider service usage rules or tariff plans that control service ratings. This conventional approach makes it difficult for the user to assess the sufficiency of his or her remaining account balance. Embodiments of the present invention are directed to a method, and apparatus for determining available service amounts corresponding to remaining account credit, based on considering the applicable tariff plans.

According to one or more embodiments, a method of operation by a computer node associated with a communication service provider includes determining an available balance in a user account used to pay for a communication service provided by the communication service provider. The method also includes translating the available balance into an available service amount for the communication service, according to a tariff plan applicable for the communication
service and a charging interval unit applicable for the communication service. The available service amount may include the number of whole charging interval units covered by the available balance of the user account. The method further includes transmitting balance information, for forwarding to a user device associated with the user account, indicating the available service amount. This method may be performed in response to receiving a balance inquiry for the user account.

In one or more other embodiments, a computer node includes communication circuitry and processing circuitry. The processing circuitry is configured to determine an available balance in a user account used to pay for a communication service provided by the communication service provider and translate the available balance into an
communication service, according to a tariff plan applicable for the communication service and a charging interval unit applicable for the communication service. The processing circuitry is also configured to transmit balance information via the communication circuitry, for forwarding to a user device associated with the user account. The balance information indicates the available service amount.

In yet other embodiments, a computer node includes a determining module configured to determine an available balance in a user account used to pay for a communication service provided by a communication service provider and a translating module configured to translate the available balance into an available service amount for the communication service, according to a tariff plan applicable for the communication service and a charging interval unit applicable for the communication service. The computer node also includes a transmitting module configured to transmit balance information, for forwarding to a user device associated with the user account. The balance information indicates the available service amount.

Other embodiments may include a device, network node, apparatus or computer readable medium to carry out the methods described above.

Among the various advantages provided by the method and apparatus contemplated herein, an end user can know at a given point in time how many service units are currently available to the user, based on the available account balances. The end user, therefore, has an accurate view of the sufficiency of his or her account balance with respect to the amount of communication service or services covered by the balance, based on the applicable serving ratings.

Of course, the present invention is not limited to the above features and advantages. Indeed, those skilled in the art will recognize additional features and advantages upon reading the following detailed description, and upon viewing the accompanying drawings.

### Brief Description Of The Drawings

Figure 1 is a block diagram of an embodiment of a computer node configured to process service charging requests and balance inquiries.
Figure 2 is a block diagram of a rating and charging engine, as an example of the computer node introduced in Figure 1.
Figure 3 is a signaling diagram of one embodiment of a rating engine responding to a user-account balance inquiry.
Figure 4 is a flowchart illustrating one embodiment of a method of determining the amount of service available in view of an available balance in a user account.
Figure 5 is a flowchart illustrating example details for determining the amount of service available in view of an available balance in a user account.
Figure 6 is a flowchart illustrating further example details for determining the amount of service available in view of an available balance in a user account, including the possibility of having multiple accounts to consider and multiple services to consider.
Figure 7 is a diagram illustrating an example interrelation of services (S), rate plans (RP) and corresponding account balances (B), for a user.
Figure 8 is a diagram illustrating example services, rate plans, and respective account balances.
Figure 9 is another diagram illustrating example services, rate plans, and a shared account balance.

### Detailed Description

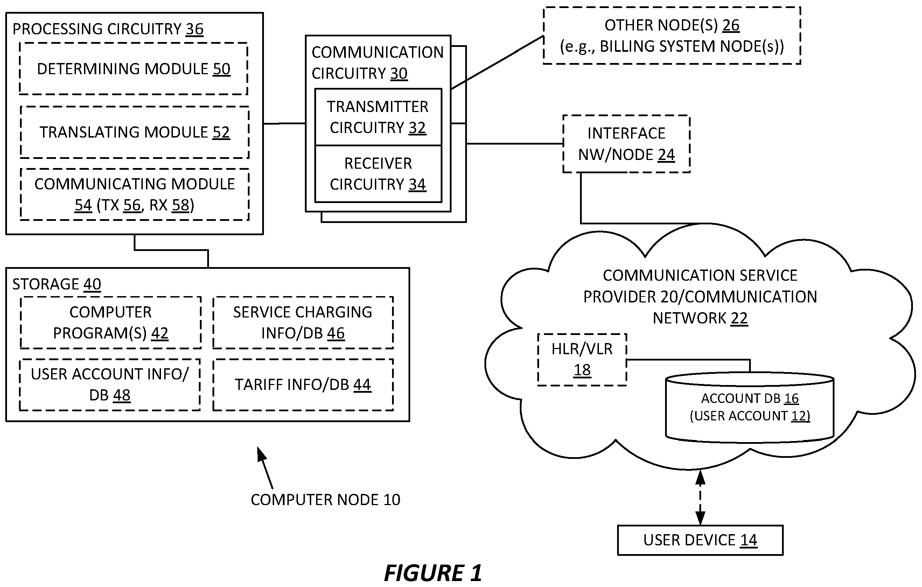

Figure 1 is a block diagram of an embodiment of a computer node 10 that is configured to determine the amount of communication-service usage available to a user, in view of the available account balance(s) associated with the user, e.g., as contained in a user account 12 corresponding to a user device 14 that is used by the user to consume the communication service(s) in question. The user account 12 exists in an account database 16, for example, which may be associated with or accessible to a Home Location Register (HLR) or Visited Location Register (VLR) 18 that are associated with a communication service provider 20, represented by a communication network 22 that is accessed by the user device 14, for gaining use of the one or more communication services in question. The computer node 10 may comprise part of the communication network 22 or may interface to the communication network 22 via one or more interface networks/nodes 24, and the computer node 10 may also interconnect with one or more other nodes 26, e.g., billing-system nodes in a billing domain.

In the illustrated example embodiment, the computer node 10 includes communication circuitry 30 comprising transmitter circuitry 32 and receiver circuitry 34. In at least one embodiment, the transmitter circuitry 32 and the receiver circuitry 34 comprise interface circuits for a computer-data network, e.g., Ethernet-based interface circuitry. More broadly, the communication circuitry 30 comprises physical-layer interface circuitry supporting wired and/or wireless communications according to the applicable communication protocol(s).

The computer node 10 further includes processing circuitry 36 that is configured to determine an available balance in a user account 12 used to pay for a communication service provided by the communication service provider 20, translate the available balance into an available service amount for the communication service, according to a tariff plan applicable for the communication service and a charging interval unit applicable for the communication service, and transmit balance information via the communication circuitry 30, for forwarding to a user device 14 associated with the user account 12. Advantageously, the balance information indicates the available service amount. Correspondingly, the user device 14 displays such information to the user via an included display screen or otherwise makes such information available to the user of the user device 14.

In one or more embodiments, the processing circuitry 36 is configured to perform the determining, translating, and transmitting operations responsive to receiving, via the communication circuitry 30, a balance inquiry for the user account 12. For example, the user device 14 originates a balance inquiry, based on user input, causing the communication network 22 to send inquiry signaling towards the computer node 10. The balance inquiry received at the computer node 10 comprises, in one or more embodiments, a Representational State Transfer (REST) based request corresponding to an Unstructured Supplementary Service Data (USSD) based request originating from the user device 14.

In the same embodiment(s), or in one or more other embodiments, the processing circuitry 36 is configured to perform the determining, translating, and transmitting operations responsive to at least one of the available balance falling to a level corresponding to a minimum chargeable service usage, or a periodic trigger.

The processing circuitry 36 is configured to determine the available balance in the user account 12 by one of determining a monetary amount remaining in a prepaid account or determining a remaining monetary credit in an offline billing account. In either case, the processing circuitry 36 is configured to translate the available balance by determining, as the available service amount, the number of whole charging interval units covered by the available balance, based on rating each charging interval unit according to the tariff plan. In some embodiments, or in some cases, the processing circuitry 36 is configured to determine the available balance in the user account 12 by determining an aggregate available balance across two or more accounts chargeable for the use of the communication service by the user.

For example, the "communication service" may be two or more types of communication services chargeable against the user account. For such scenarios, the processing circuitry 36 is configured to translate the available balance by translating the available balance into a corresponding available service amount for each of the two or more types of communication services, according to a corresponding tariff plan and a corresponding charging interval unit for each of the two or more types of communication services. Correspondingly, the processing circuitry 36 is configured to transmit the balance information by transmitting, via the communication circuitry 30, the corresponding available service amounts for each of the two or more types of communication services.

Further, the processing circuitry 36 is configured to transmit balance information via the communication circuitry 30, for forwarding to the user device 14 associated with the user account 12. Advantageously, the balance information indicates the available service amount, for one or more communication services.

The processing circuitry 36 comprises, for example, one or more microprocessor-based circuits, Digital Signal Processors (DSPs), Field Programmable Gate Arrays (FPGAs), Application Specific Integrated Circuit(s) (ASICs), or other types of digital circuitry. In general, the processing circuitry 36 comprises fixed circuitry, programmatically-configured circuitry, or some combination of fixed circuitry and programmatically-configured circuitry. In at least one embodiment, the processing circuitry 36 comprises one or more microprocessors or other digital processors that are configured to implement at least some of the functionality described herein for the computer node 10, based on the execution of computer program instructions from a stored computer program. In that regard, to the extent that the processing circuitry 36 uses general-purpose processors, such processors are specially adapted, based on their execution of the stored computer program instructions.

For example, the processing circuitry 36 includes or is associated with storage 40, comprising one or more types of computer-readable media, such as volatile storage for working memory and program execution, and non-volatile storage for longer-term storage of computer program instructions and various configuration data or other operational information. In the example illustration, the storage 40 stores one or more computer programs 42, tariff information for rating one or more communication services, e.g., in terms of cost per interval of service consumption, related service charging information 46, and user account information/database 48, which, for example, holds monetary or other credit balance information for user accounts, which may be prepaid accounts and/or offline credit accounts. At least some such information may not be stored local to the computer node 10, and instead is accessible to the computer node 10 via the interface network/node 24 and/or the other nodes 26. Non-limiting examples of voltage storage include SRAM and DRAM, while examples of volatile storage include FLASH memory and disk storage.

In another aspect of the computer node 10, the node 10 comprises a number of functional processing units or modules, such as may be implemented via configuration of one or more digital processing circuits that embody the processing circuitry 36. In an example configuration, the computer node 10 includes a determining module 50 configured to determine an available balance in a user account 12 used to pay for a communication service provided by a communication service provider 20, and a translating module 52 configured to translate the available balance into an available service amount for the communication service, according to a tariff plan applicable for the communication service and a charging interval unit applicable for the communication service. Further, the computer node 10 includes a transmitting module 56, e.g., as part of a communication mode 54 that also includes a receiving module 58. The transmitting module 56 is configured to transmit balance information, for forwarding to a user device 14 associated with the user account 12. The balance information indicates the available service amount.

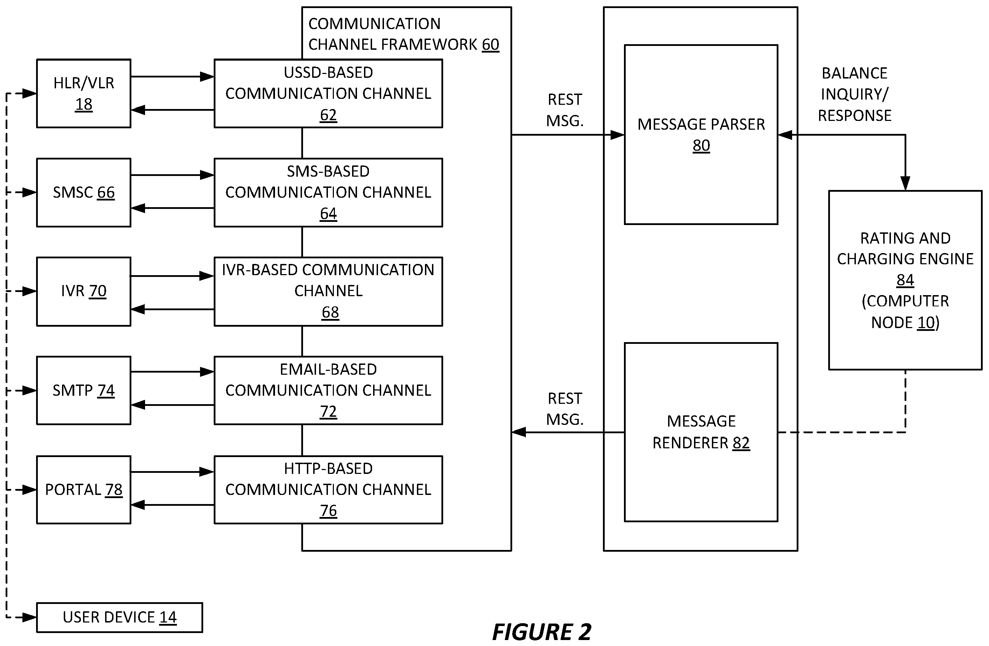

Figure 2 illustrates the use of any one or more communication channels or signaling paths for conveying a balance inquiry from a user device 14 and returning available balance and service amounts, as contemplated herein. An overall communication channel framework 60 supports, for example, a USSD-based communication channel 62, involving communications flowing through an HLR/VLR 18; a Short Messaging Service (SMS)-based communication channel 64, involving communications flowing through an SMS Center 66; an Interactive Voice Response (IVR)-based communication channel 68, for communicating via IVR node/system 70; an email-based communication channel 72, for communicating via Simple Mail Transfer Protocol (SMTP) node/system 74; and a HyperText Transfer Protocol (HTTP)-based communication channel 76, for communicating via a web portal 78.

A message parser 80 operates on balance-inquiry messages incoming from the communication channel framework, providing parsed balance/inquiries to a rating and charging engine 84, which operates as an example of the computer node 10 introduced in Figure 1. The rating and charging engine 84 receives a parsed balance inquiry, obtains the corresponding available account balance(s), tariff plans for the involved communication service(s), and computes the available service amount(s). The response message may be rendered via a message renderer 82 and returned to the communication channel framework 60, for conveyance back to the involved user device 14. Figure 2 shows REST-based messaging.

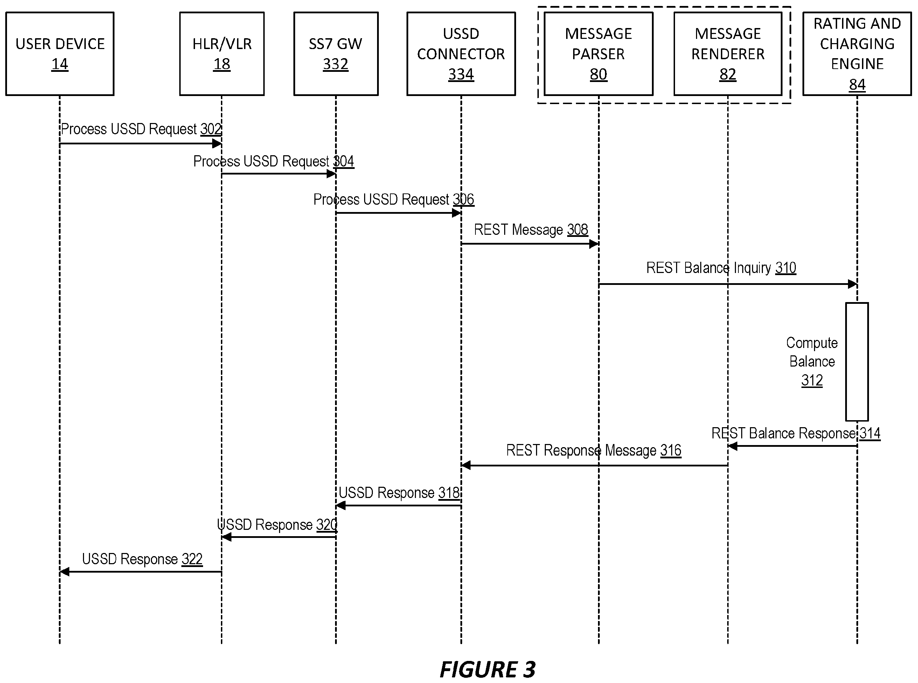

Figure 3 is a signaling diagram in the case of, for example, an example implementation with the USSD channel 62. The communication channel framework 60 may, in response to USSD requests, pass balance inquiry information in a REST message to a message parser 80, which provides the balance inquiry to the rating and charging engine 84 that operates as an example of the computer node 10.

A USSD request 302 from the user device 14 may include a code allocated for a balance inquiry (e.g., *102#). The USSD request 302 is sent to an HLR/VLR 18, which processes the request and sends a corresponding USSD Request 304 to an SS7 GW 332. The SS7 GW 332 processes the USSD Request 304 and sends a corresponding USSD Request 306 to a USSD connector 334. The USSD connector 334, upon getting the USSD Request 306, sends a Representational State Transfer (REST) message 308 with the balance inquiry to the message parser 80, which is part of a message processing system that parses the message for the rating and charging engine 84. In this case, the message parser 80 understands the code to be for a balance inquiry, and hence calls the REST API implementation for the balance inquiry to send a REST balance inquiry 310 to the rating and charging engine 84, which, in processing 312, determines the available account balance(s) and determines the corresponding available service amount(s).

The rating and charging engine 84 sends such information towards the user device 14, via a REST Balance Response 314. Rather than containing, or merely containing, the account balance(s) of the user account(s) 12 that are associated with the user device 14, the REST Balance Response indicates the amount of service available, based on the account balance(s), for one or more communication services, e.g., for all of the communication services that can be paid for via the applicable user account(s). In any case, in the example signal flow, the message renderer 82 sends the balance response in a REST Response Message 316 to the USSD connector 334, which sends a USSD response 318 to the SS7 GW 332. The SS7 GW 332 sends a USSD response 320 to HLR/VLR 18, which provides a USSD response 322 back to the user device 14.

The signaling diagram of Figure 3 is one, non-limiting example of the contemplated messaging, and some components may be removed or replaced by other intermediate components. The network entities that send the balance inquiry from the user device 14 to the rating and charging engine 84 may vary, as suggested in Figure 2.

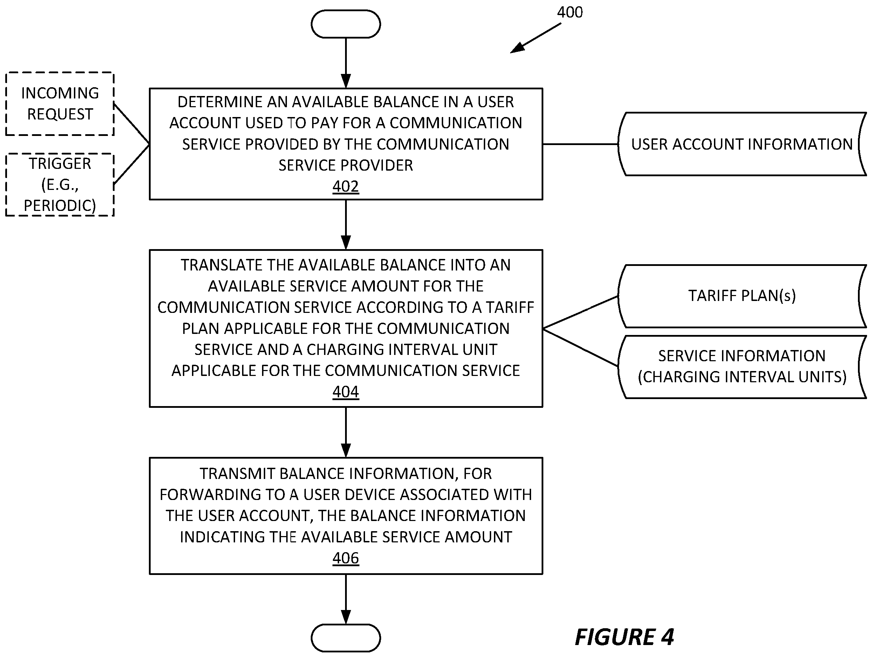

Whether performed by the rating and charging engine 84, or by another embodiment of the computer node 10, the method 400 of Figure 4 illustrates an example method of the computer node 10 determining and transmitting balance information. One or more steps of the method 400 may be performed in an order other than that suggested by the illustration and the method 400 may be performed on a repeated or ongoing basis, e.g., in parallel for more than one user device 14, and may be performed as part of other operations.

The method 400 includes determining an available balance in a user account 12 used to pay for a communication service provided by a communication service provider 20 (block 402). The method 400 also includes translating the available balance into an available service amount for the communication service, according to a tariff plan applicable for the communication service and a charging interval unit applicable for the communication service (block 404). The charging interval unit defines the usage increments by which usage of the communication service is metered and charged, e.g., minutes or other temporal units for voice services, and megabytes or other data-volume units for data-related services.

The method 400 further includes transmitting balance information, for forwarding to the user device 14 associated with the user account 12 (block 406). The balance information indicates the available service amount.

The determining, translating and transmitting operations may be responsive to receiving a balance inquiry for the user account 12. Receiving the balance inquiry may include receiving a REST-based request corresponding to USSD based request originating from the user device 14. Additionally, or alternatively, the determining, translating and transmitting operations are performed on a triggered basis, such as responsive to the available balance falling to a level corresponding to a minimum chargeable service usage. Other possible triggered bases include periodic triggering.

In some embodiments, determining the available balance in the user account 14 includes either determining a monetary amount remaining in a prepaid account or determining a remaining monetary credit in an offline billing account. That is, while the method and apparatus disclosed herein are advantageous for use with prepaid accounts, they are not limited to prepaid accounts. Regardless of the particular type of user account involved, translating the available balance may include determining, as the available service amount, the number of whole charging interval units covered by the available balance. Such a determination is based, for example, on rating each charging interval unit according to the applicable tariff plan. That is, the computer node 10 uses the tariff plan to determine the monetary or credit "cost" per charging interval unit for the communication service in question, and then determines the integer number of charging interval units covered by the available balance.

In some embodiments, or in some operational scenarios, the "communication service" is two or more communication services chargeable against the user account 12. That is, for a given user account 12, there may be more than one communication service chargeable against the account 12, and the computer node 10 may determine the available amount of service for each such communication service. Thus, translating the available balance may include translating the available balance into a corresponding available service amount for each of the two or more types of communication services, according to a corresponding tariff plan and a corresponding charging interval unit for each of the two or more types of communication services. Transmitting the balance information then includes transmitting the corresponding available service amounts for each of the two or more types of communication services.

The embodiments described herein may be used for balance inquiries for prepaid service for wireless devices. A balance inquiry may be tied to a prepaid SIM card, and there can be a dedicated number the user can call for a balance inquiry. The computer node 10 may compute the balance information when triggered by an inquiry from the user, or it may compute the balance information on a periodic basis or in response to configured thresholds. The computed balance information may be delivered via SMS.

The computed balance information depends on the applicable tariffs or other service "ratings", which may vary based on location, business rules, ongoing promotions, time, day (weekend), roaming (home versus visited networks), or the called numbers or communication-session participants. The rate may also be fixed, but with prepaid phones, these factors may be more dynamic than when the user is part of a set plan for a dedicated network. In any case, the computer node 10 contains or has access to the applicable rating rules and applicable rating variables-e.g., current user location, time, network loading, promotions, etc. For example, in networks based on Third Generation Partnership Project (3GPP) specifications, the applicable protocols provide for supplying the computer node 10 with all applicable rating parameters.

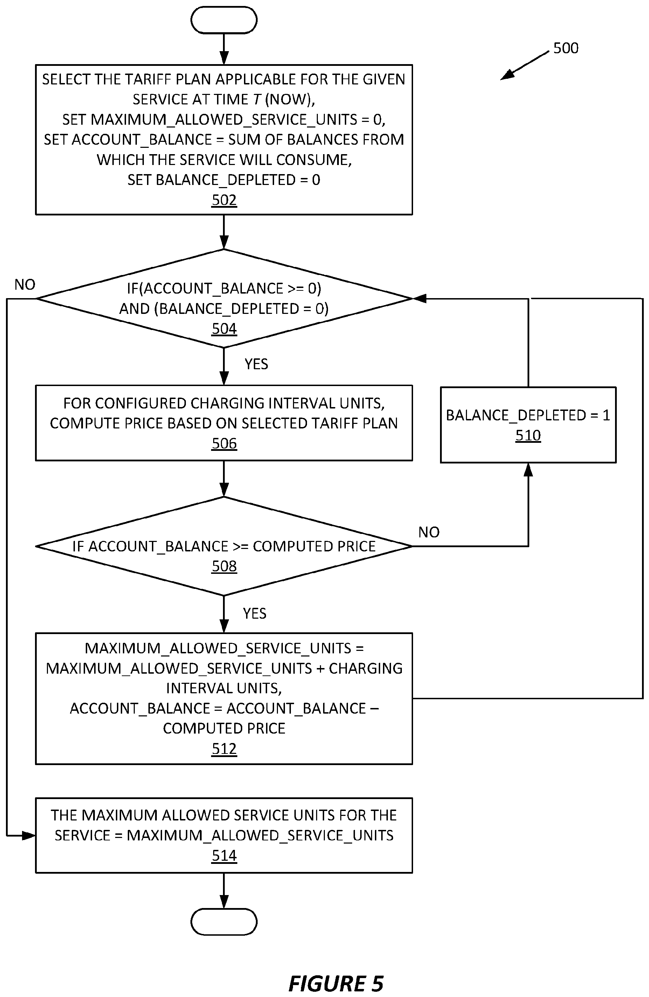

Figure 5 is a flowchart that may be understood as a more detailed example of the method (500) of Figure 4, and it is directed to computing the available service amount for a given communication service. The time "T" may be taken as the present, i.e., the time at which the rating is being performed. In general, time T will be close in time to the request origination.

In block 502, the computer node 10 selects the tariff plan applicable at time T to the involved communication service and it initializes a number of variables: Maximum_Allowed_Service_Units = 0; Account_Balance = sum of all possible balances at time "T" that can be consumed by the involved communication service as per the rate plan configuration; and Balance_Depleted_Flag = 0. Processing repeats while Account_Balance >= 0 and Balance_Depleted_Flag = 0 (decision block 504).

The computer node 10 determines the charging interval unit applicable to the service and determines the minimum number of charging interval units that can be rated, which may be one charging interval unit or may be more than one. The minimum number of charging interval units that can be rated is represented by Charging_Interval_Units.

The computer node 10 then determines the monetary or credit cost of Charging_Interval_Units, based on the rating rules and rating parameters applicable for the user device 14 at time T (Block 506). The computer node 10 compares the Computed_Price to the Account_Balance. If Account_Balance > Computed_Price (decision block 508), then Maximum_Allowed_Service_Units = Maximum_Allowed_Service_Units + Charging_Interval_Units. The computer node 10 correspondingly updates the Account_Balance to reflect the "consumption". That is, the computer node 10 updates the Available_Balance as Available_Balance = Available_Balance - Computed Price (block 512). However, if the value of the Available_Balance is insufficient to cover the Computed_Price (no from Block 512), the computer node 10 sets the Balance_Depleted flag to 1 (Block 510), which causes processing to skip from Block 504 to Block 514. Block 514 involves the computer node 10 reporting the available service amount as the computed value of Maximum_Allowed_Service_Units. That value can be understood as the Charging_Interval_Units multiplied by the number of times that processing passes through Block 512. To the extent that the initial Account_Balance is insufficient to cover the "cost" the Charging_Interval_Units, the Maximum_Allowed_Service_Units will be zero.

A prepaid or other accounts system may maintain one or more account balances for a given subscriber/user, and provide for service consumption using more than one account balance, e.g., an aggregation of account balances. Example balances may include the main account balance, a promotional balance, fee unit balance, etc. If "B" denotes a balance, then multiple balances can be represented by "Bi" where i = 1, 2, 3....n.

A prepaid or offline billing system may offer multiple communication services, such as Voice, Data, and SMS. In general, if "S" denotes a service, then multiple services can be represented by "Si" where i = 1, 2, 3...m.

The various services Si, i = 1, 2, 3...m are provided to the user with a defined price. The price for consuming the service is called a rate plan, which can be regarded as tariff information. For service Si, the price may be calculated as per rate plan "RPi" where i = 1, 2, 3...m, then the service Si is charged by a rate plan RPi. That is, a Service "Si" charged by rate plan "RPi" can be paid for via one or more balances "Bi" where i = 1, 2, 3...n. The rate plan may define the charging interval unit used for metering the service in question and may define the minimum number of charging interval units that can be rated. If the user account balance(s) are not sufficient to cover the minimum ratable consumption for the involved communication service, then the amount of service available may be reported as zero.

For every rate plan, there may exist a configuration that indicates the minimum number of units that can be rated-the minimum number of charging interval units. Any charging request will be made to conform to the minimum chargeable amount. If there is a balance that is not sufficient, the price for a charging interval unit will be kept as is. If "CI" denotes a charging interval, then for rate plan "RPi" where i = 1, 2, 3...m, there will be a corresponding "CIi" where i = 1, 2, 3...m.

Considering all the above parameters, a prepaid charging structure can be defined as follows. A given service "Si", subscribed with rate plan "RPi" with charging interval "CIi" where i = 1, 2, 3...m, can be charged from balances "Bj" where j is in {1, 2, 3...n}. That is, the parameters {Si, RPi, CIi}, where "i is in {1, 2, 3, ...m}", can consume from {Bj} where j is in {1, 2, 3...n}. For example, service S1 with rate plan RP1 having Charging Interval CI1 can consume from balance B1, or {S1, RP1,CI1} can consume from {B1}. Service S2 with rate plan RP2 having Charging Interval CI2 can consume from balance B2, or {S2, RP2,CI2} can consume from {B2}. Service S3 with rate plan RP3 having Charging Interval CI3 can consume from balance B1, B2, B3, or {S3, RP3,CI3} can consume from {B1, B2, B3}

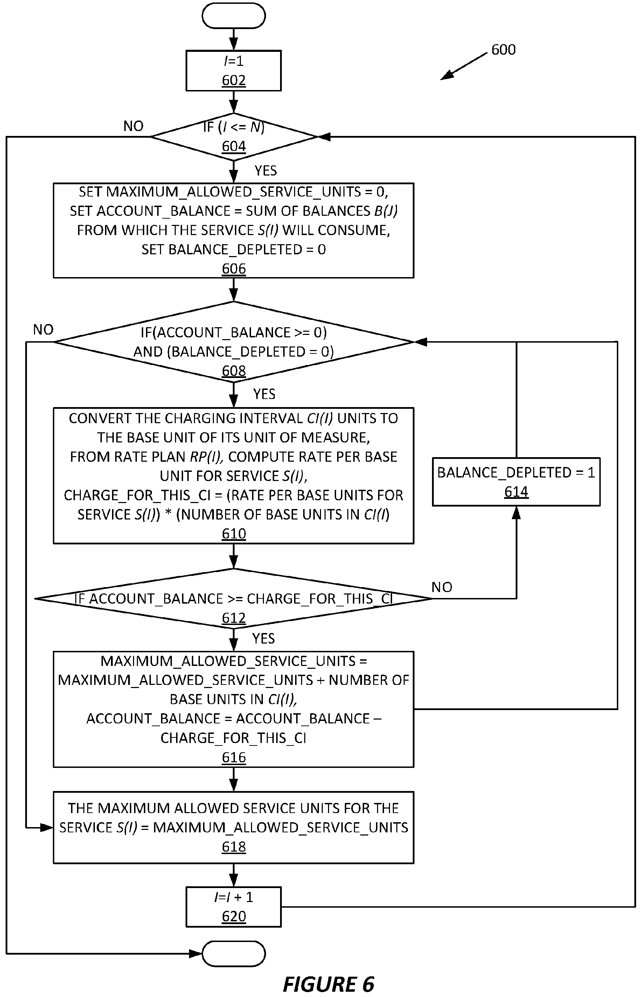

Figure 6 is a flowchart that shows an example algorithm 600 that may be used to compute the maximum allowed usable service units for service S(i) with rate plan RP(i) having charging interval CI(i), where the charges can be consumed from balance B(j) where j is in {1, 2, 3...n}.

The algorithm 600 of Figure 6 is as follows. For i = 1 to n (blocks 602 and decision block 604), Maximum_Allowed_Service_Units = 0, Account_Balances = Sum of balances B(j) where j is in {1,2,3...n} and where Service S(i) with rate plan RP(i) can get charged from balance B(j), and Balance_Depleted = 0 (block 606). While Account_Balance >= 0 and Balance_Depleted = 0 (decision block 608), the Charging Interval CI(i) units are converted to the base units of its unit of measure, rate per Base Unit for service S(i) is computed from rate plan RP(i) and Charge_For_This_CI = (Rate Per Base Units for Service S(i)) * (Number of Base units in CI(i)) (block 610).

If Account_Balance >= Charge_For_This_CI (decision block 612), then Maximum_Allowed_Service_Units = Maximum_Allowed_Service_Unis + Number of Base Units in CI(i), and Account_Balance = Account_Balance - Charge_For_This_CI (block 616). Otherwise, Balance_Depleted = 1 (block 614). The maximum allowed service units for service S(i) = Maximum_Allowed_Service_Units; (block 618). The i is then incremented (block 620).

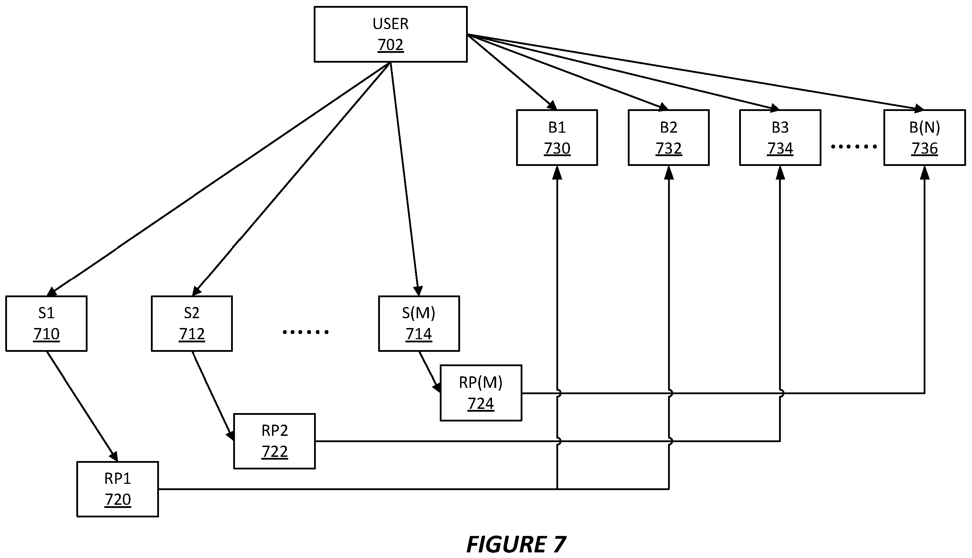

Figure 7 illustrates a user 702 having a number of different communication services available, service 710 denoted as "S1", service 712, denoted as "S2", and service 714, denoted as "S(M)". Each service has a corresponding rating plan, shown as rating plan 720 (RP1), rating plan 722 (RP2), and rating plan 724 (RP(M)). The user 702 is associated with a number of accounts, including account 730 having a monetary or credit balance of B1, account 732 having a balance of B2, account 734 having a balance of B3, and account 736 having a balance of B(N).

The communication service S1 is chargeable to accounts 730 and 732, meaning that determining the available amount of service for service S1 considers both balances, e.g., the aggregate balance if both accounts are based on the same monetary or credit units. However, the service S2 is chargeable only to account 734, meaning that the available service amount for the service S2 considers only the balance B3. Similarly, the service S(M) is chargeable only to the account 736, meaning that the available service amount for the service S(M) considers only the balance B(M). Note that the rate plans RP1 through RP(M) may be parameterized for prevailing conditions or circumstances, such as time, network loading, roaming status of the user 702, location of the user 702, applicable business or vendor promotions, etc.

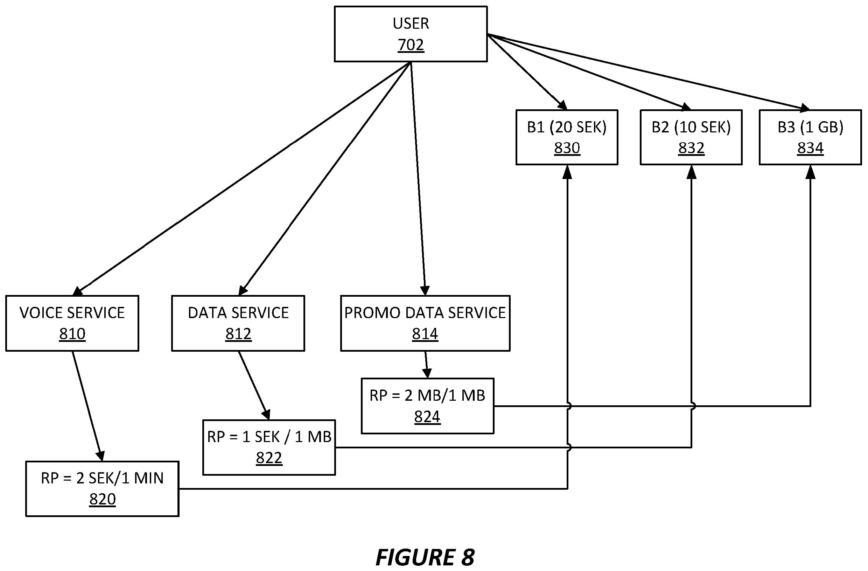

Figure 8 shows an example of exclusive balances, where a balance can only be consumed by a particular service. The example involves a voice service, service 810, that is chargeable against an account 830 having a monetary balance of 20 Swedish Krona (SEK), a data service, service 812, that is chargeable against an account 832 having a monetary balance of 10 SEK, and a promotional data service, service 814, that is chargeable against an account 834 having a data credit of 1 GB. A rate plan 820 applies to the service 810, stipulating a charge of 2 SEK per minute of service consumption; a rate plan 822 applies to the service 812, stipulating a charge of 1 SEK per megabyte (MB) of service consumption; and a rate plane 824 applies to the service 814, stipulating that 1 MB is charged for every 2 MB of consumption. Thus, determining the available service amount for the service 810 involves computing the number of voice minutes covered by the 20 SEK balance in the account 830. Similarly, computing available service amount for the service 812 involves computing the number of MBs covered by the 10 SEK balance in the account 832.

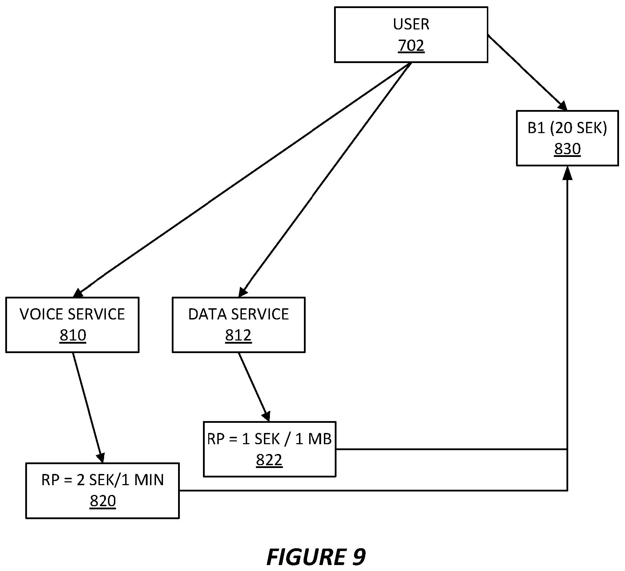

Figure 9 illustrates an example of a shared balance, where more than one service is chargeable to the same account. In this example, the user 702 has two chargeable communication services, "Voice Service" 810 and "Data Service" 812. The "Voice Service" 810 is rated at 2 SEK per 1 Min according to the rate plan 820. The "Data Service" 812 is rated at 1 SEK per MB according to the rate plan 822. Both services 810 and 812 are chargeable against the same account 830, which has an available balance B1. The computer node 10 in one or more embodiments computes the available amount of service for each of the services 810 and 812 by considering the entire balance B1 with respect to each of the services 810 and 812. That is, the computed available amount of service for the service 810 assumes that the full balance B1 is allocated to the service 810 and, independently, computes the available amount of service for the service 812 by assuming that the full balance B1 is allocated to the service 812. The return message for the user 702 may include information clarifying that account balance covers one of the available amounts of service.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method (400) of operation by a computer node (10) associated with a communication service provider (20), the method (300) comprising:
determining (402) an available balance in a user account (12) used to pay for a communication service provided by the communication service provider (20);
translating (404) the available balance into an available service amount for the communication service, according to a tariff plan applicable for the communication service and a charging interval unit applicable for the communication service; and
transmitting (406) balance information, for forwarding to a user device (14) associated with the user account (12), the balance information indicating the available service amount
**characterized in that** the step of determining the available balance in the user account comprises determining an aggregate available balance across two or more accounts chargeable for use of the communication service by the user and the step of translating the available balance comprises determining, as the available service amount, the number of whole charging interval units covered by the available balance, based on rating each charging interval unit according to the tariff plan.

2. The method (400) of claim 1, further comprising performing the determining (402), translating (404), and transmitting (406) operations responsive to receiving a balance inquiry for the user account (12).

3. The method (400) of claim 2, wherein receiving the balance inquiry comprises receiving a Representational State Transfer (REST)-based request corresponding to an Unstructured Supplementary Service Data (USSD)-based request originating from the user device (14).

4. The method (400) of claim 1, further comprising performing the determining (402), translating (404), and transmitting (406) operations responsive to at least one of: the available balance falling to a level corresponding to a minimum chargeable service usage, or a periodic trigger.

5. The method (400) of any of claims 1-4, wherein determining (402) the available balance in the user account (14) comprises one of determining a monetary amount remaining in a prepaid account or determining a remaining monetary credit in an offline billing account.

6. The method (400) of any of claims 1-5, wherein transmitting (406) the balance information comprises transmitting the balance information towards a network node (18) in a communication network (22) associated with the communication service provider (20).

7. The method (400) of any of claims 1-6, wherein the communication service comprises two or more types of communication services chargeable against the user account (12), and
wherein translating (404) the available balance comprises translating the available balance into a corresponding available service amount for each of the two or more types of communication services, according to a corresponding tariff plan and a corresponding charging interval unit for each of the two or more types of communication services, and
wherein transmitting (406) the balance information comprises transmitting the corresponding available service amounts for each of the two or more types of communication services.

8. A computer node (10) comprising:
communication circuitry (30); and
processing circuitry (36) configured to:
determine an available balance in a user account (12) used to pay for a communication service provided by the communication service provider (20);
translate the available balance into an available service amount for the communication service, according to a tariff plan applicable for the communication service and a charging interval unit applicable for the communication service; and
transmit balance information via the communication circuitry (30), for forwarding to a user device (14) associated with the user account (12), the balance information indicating the available service amount
**characterized in that** to determine the available balance in the user account (12) comprises to determine an aggregate available balance across two or more accounts chargeable for use of the communication service by the user and to translate the available balance comprises to determine, as the available service amount, the number of whole charging interval units covered by the available balance, based on rating each charging interval unit according to the tariff plan.

9. The computer node (10) of claim 8, wherein the processing circuitry (36) is configured to perform the determining, translating, and transmitting operations responsive to receiving, via the communication circuitry (30), a balance inquiry for the user account (12).

10. The computer node (10) of claim 8, wherein the processing circuitry (36) is configured to perform the determining, translating, and transmitting operations responsive to at least one of: the available balance falling to a level corresponding to a minimum chargeable service usage, or a periodic trigger.

11. The computer node (10) of any of claims 8-10, wherein, via the communication circuitry (30), the processing circuitry (36) is configured to transmit the balance information towards a network node (18) in a communication network (22) associated with the communication service provider (20).

12. The computer node (10) of any of claims 8-11, wherein the communication service comprises two or more types of communication services chargeable against the user account, and
wherein the processing circuitry (36) is configured to translate the available balance by translating the available balance into a corresponding available service amount for each of the two or more types of communication services, according to a corresponding tariff plan and a corresponding charging interval unit for each of the two or more types of communication services, and
wherein the processing circuitry (36) is configured to transmit the balance information by transmitting, via the communication circuitry (30), the corresponding available service amounts for each of the two or more types of communication services.

## Patentansprüche

1. Verfahren (400) zum Betreiben eines Computerknotens (10), der mit einem Kommunikationsdienstanbieter (20) verknüpft ist, wobei das Verfahren (300) umfasst:
Bestimmen (402) eines verfügbaren Guthabens in einem Benutzer-Account (12), das verwendet wird, um für einen vom Kommunikationsdienstanbieter (20) bereitgestellten Kommunikationsdienst zu bezahlen;
Umrechnen (404) des verfügbaren Guthabens in einen verfügbaren Dienstbetrag für den Kommunikationsdienst gemäß einem für den Kommunikationsdienst anwendbaren Tarifplan und einer für den Kommunikationsdienst anwendbaren Ladeintervalleinheit; und
Übertragen (406) von Guthabeninformationen zur Weiterleitung an eine Benutzervorrichtung (14), die mit dem Benutzerkonto (12) verknüpft ist, wobei die Guthabeninformationen den verfügbaren Dienstbetrag angeben
**dadurch gekennzeichnet, dass** der Schritt zum Bestimmen des verfügbaren Guthabens in dem Benutzer-Account Bestimmen eines zusammengefassten verfügbaren Guthabens über zwei oder mehr Accounts umfasst, die zur Verwendung des Kommunikationsdienstes durch den Benutzer ladbar sind, und der Schritt zum Umrechnen des verfügbaren Guthabens Bestimmen der Anzahl der vollen Ladeintervalleinheiten, die vom verfügbaren Guthaben abgedeckt werden, als verfügbaren Dienstbetrag, basierend auf der Bewertung jeder Ladeintervalleinheit gemäß dem Tarifplan umfasst.

2. Verfahren (400) nach Anspruch 1, weiter umfassend Durchführen der Bestimmungs- (402), Umrechnungs- (404) und Übertragungsoperationen (406) als Reaktion auf Empfangen einer Guthaben-Abfrage für den Benutzer-Account (12).

3. Verfahren (400) nach Anspruch 2, wobei Empfangen der Guthaben-Abfrage Empfangen einer Representational State Transfer-, (REST)-basierten Anfrage umfasst, die einer Unstructured Supplementary Service Data-, (USSD)-basierten Anfrage entspricht, die von der Benutzervorrichtung (14) stammt.

4. Verfahren (400) nach Anspruch 1, weiter umfassend Durchführen der Bestimmungs- (402), Umrechnungs- (404) und Übertragungsoperationen (406) als Reaktion auf mindestens eines von: dem Unterschreiten eines verfügbaren Guthabens auf eine Stufe, die einer minimalen ladbaren Dienstnutzung entspricht, oder einem periodischen Auslöser.

5. Verfahren (400) nach einem der Ansprüche 1-4, wobei Bestimmen (402) des verfügbaren Guthabens auf dem Benutzer-Account (14) eines von Bestimmen eines Geldbetrags, der auf einem Prepaid-Account verblieben ist oder Bestimmen eines Geldguthabens, das auf einem Offline-Abrechnungs-Account verblieben ist, umfasst.

6. Verfahren (400) nach einem der Ansprüche 1-5, wobei Übertragen (406) der Guthabeninformationen Übertragen der Saldeninformationen an einen Netzwerkknoten (18) in einem Kommunikationsnetz (22) umfasst, das mit dem Kommunikationsdienstanbieter (20) verknüpft ist.

7. Verfahren (400) nach einem der Ansprüche 1-6, wobei der Kommunikationsdienst zwei oder mehr Arten von Kommunikationsdiensten umfasst, die auf den Benutzer-Account (12) ladbar sind, und
wobei Umrechnen (404) des verfügbaren Guthabens Umrechnen des verfügbaren Guthabens in einen entsprechenden verfügbaren Dienstbetrag für jede der zwei oder mehr Arten von Kommunikationsdiensten gemäß einem entsprechenden Tarifplan und einer entsprechenden Ladeintervalleinheit für jede der zwei oder mehr Arten von Kommunikationsdiensten umfasst, und
wobei Übertragen (406) der Guthabeninformationen Übertragen der entsprechenden verfügbaren Dienstbeträge für jede der zwei oder mehr Arten von Kommunikationsdiensten umfasst.

8. Computerknoten (10) umfassend:
eine Kommunikationsschaltung (30); und
eine Verarbeitungsschaltung (36), die konfiguriert ist, um:
ein verfügbares Guthaben in einem Benutzer-Account (12) zu bestimmen, das verwendet wird, um für einen vom Kommunikationsdienstanbieter (20) bereitgestellten Kommunikationsdienst zu bezahlen;
das verfügbare Guthaben in einen verfügbaren Dienstbetrag für den Kommunikationsdienst gemäß einem für den Kommunikationsdienst anwendbaren Tarifplan und einer für den Kommunikationsdienst anwendbaren Ladeintervalleinheit umzurechnen; und
Guthabeninformationen über die Kommunikationsschaltung (30) zur Weiterleitung an eine Benutzervorrichtung (14), die mit dem Benutzerkonto (12) verknüpft ist, zu übertragen, wobei die Guthabeninformationen den verfügbaren Dienstbetrag angeben
**dadurch gekennzeichnet, dass** um das verfügbaren Guthaben in dem Benutzer-Account (12) zu bestimmen, um ein zusammengefasstes verfügbares Guthaben über zwei oder mehr Accounts zu bestimmen, die zur Verwendung des Kommunikationsdienstes durch den Benutzer ladbar sind, und um das verfügbare Guthaben umzurechnen, die Anzahl der vollen Ladeintervalleinheiten, die vom verfügbaren Guthaben abgedeckt werden, als verfügbaren Dienstbetrag, basierend auf der Bewertung jeder Ladeintervalleinheit gemäß dem Tarifplan bestimmt wird.

9. Computerknoten (10) nach Anspruch 8, wobei die Verarbeitungsschaltung (36) konfiguriert ist, um die Bestimmungs-, Umrechnungs- und Übertragungsoperationen als Reaktion auf Empfangen einer Guthaben-Anfrage für den Benutzer-Account (12) über die Kommunikationsschaltung (30) durchzuführen.

10. Computerknoten (10) nach Anspruch 8, wobei die Verarbeitungsschaltung (36) konfiguriert ist, um die Bestimmungs-, Umrechnungs- und Übertragungsoperationen als Reaktion auf mindestens eines von: dem Unterschreiten eines verfügbaren Guthabens auf eine Stufe, die einer minimalen ladbaren Dienstnutzung entspricht, oder einem periodischen Auslöser durchzuführen.

11. Computerknoten (10) nach einem der Ansprüche 8-10, wobei die Verarbeitungsschaltung (36) über die Kommunikationsschaltung (30) konfiguriert ist, um die Guthabeninformationen an einen Netzwerkknoten (18) in einem mit dem Kommunikationsdienstanbieter (20) verknüpften Kommunikationsnetzwerk (22) zu übertragen.

12. Computerknoten (10) nach einem der Ansprüche 8-11, wobei der Kommunikationsdienst zwei oder mehr Arten von Kommunikationsdiensten umfasst, die auf den Benutzer-Account ladbar sind, und
wobei die Verarbeitungsschaltung (36) konfiguriert ist, um das verfügbare Guthaben durch Umrechnen des verfügbaren Guthabens in einen entsprechenden verfügbaren Dienstbetrag für jede der zwei oder mehr Arten von Kommunikationsdiensten gemäß einem entsprechenden Tarifplan und einer entsprechenden Ladeintervalleinheit für jede der zwei oder mehr Arten von Kommunikationsdiensten umzurechnen, und
wobei die Verarbeitungsschaltung (36) konfiguriert ist, um die Guthabeninformationen durch Übertragen der entsprechenden verfügbaren Dienstbeträge für jede der zwei oder mehr Arten von Kommunikationsdiensten über die Kommunikationsschaltung (30) zu übertragen.

## Revendications

1. Procédé (400) de fonctionnement mis en œuvre par un nœud informatique (10) associé à un fournisseur de services de communication (20), le procédé (300) comprenant :
la détermination (402) d'un solde disponible sur un compte utilisateur (12) utilisé pour payer un service de communication fourni par le fournisseur de services de communication (20) ;
la traduction (404) du solde disponible en une quantité de service disponible pour le service de communication, conformément à un plan tarifaire applicable au service de communication et à une unité d'intervalle de facturation applicable au service de communication ; et
la transmission (406) d'informations de solde, pour le transfert à un dispositif utilisateur (14) associé au compte utilisateur (12), les informations de solde indiquant la quantité de service disponible
**caractérisé en ce que** l'étape de détermination du solde disponible sur le compte utilisateur comprend la détermination d'un solde disponible agrégé sur deux comptes ou plus facturables pour l'utilisation du service de communication par l'utilisateur et l'étape de traduction du solde disponible comprend la détermination, en tant que quantité de service disponible, du nombre d'unités d'intervalles de facturation complètes couvertes par le solde disponible, sur la base de la tarification de chaque unité d'intervalle de facturation conformément au plan tarifaire.

2. Procédé (400) selon la revendication 1, comprenant en outre l'exécution des opérations de détermination (402), de traduction (404) et de transmission (406) en réponse à la réception d'une demande de solde pour le compte utilisateur (12).

3. Procédé (400) selon la revendication 2, dans lequel la réception de la demande de solde comprend la réception d'une requête basée sur un transfert d'état représentationnel (REST) correspondant à une requête basée sur des données de service supplémentaires non structurées (USSD) provenant du dispositif utilisateur (14).

4. Procédé (400) selon la revendication 1, comprenant en outre l'exécution des opérations de détermination (402), de traduction (404) et de transmission (406) en réponse à au moins un parmi : la chute du solde disponible à un niveau correspondant à une utilisation minimale de service facturable, ou un déclencheur périodique.

5. Procédé (400) selon l'une quelconque des revendications 1-4, dans lequel la détermination (402) du solde disponible sur le compte utilisateur (14) comprend une parmi la détermination d'un montant monétaire restant sur un compte prépayé ou la détermination d'un crédit monétaire restant sur un compte de facturation hors ligne.

6. Procédé (400) selon l'une quelconque des revendications 1-5, dans lequel la transmission (406) des informations de solde comprend la transmission des informations de solde vers un nœud de réseau (18) dans un réseau de communication (22) associé au fournisseur de services de communication (20).

7. Procédé (400) selon l'une quelconque des revendications 1-6, dans lequel le service de communication comprend deux types de services de communication ou plus facturables au compte utilisateur (12), et
dans lequel la traduction (404) du solde disponible comprend la traduction du solde disponible en une quantité de service disponible correspondante pour chacun des deux types de services de communication ou plus, conformément à un plan tarifaire correspondant et à une unité d'intervalle de facturation correspondante pour chacun des deux types de services de communication ou plus, et
dans lequel la transmission (406) des informations de solde comprend la transmission des quantités de service disponibles correspondantes pour chacun des deux types de services de communication ou plus.

8. Nœud informatique (10) comprenant :
des circuits de communication (30) ; et
des circuits de traitement (36) configurés pour :
déterminer un solde disponible sur un compte utilisateur (12) utilisé pour payer un service de communication fourni par le fournisseur de services de communication (20) ;
traduire le solde disponible en une quantité de service disponible pour le service de communication, conformément à un plan tarifaire applicable au service de communication et à une unité d'intervalle de facturation applicable au service de communication ; et
transmettre des informations de solde via les circuits de communication (30), pour le transfert à un dispositif utilisateur (14) associé au compte utilisateur (12), les informations de solde indiquant la quantité de service disponible
**caractérisé en ce que** déterminer le solde disponible sur le compte utilisateur (12) comprend la détermination d'un solde disponible agrégé sur deux comptes ou plus facturables pour l'utilisation du service de communication par l'utilisateur et traduire le solde disponible comprend la détermination, en tant que quantité de service disponible, du nombre d'unités d'intervalles de facturation complètes couvertes par le solde disponible, sur la base de la tarification de chaque unité d'intervalle de facturation conformément au plan tarifaire.

9. Nœud informatique (10) selon la revendication 8, dans lequel les circuits de traitement (36) sont configurés pour exécuter les opérations de détermination, de traduction et de transmission en réponse à la réception, via les circuits de communication (30), d'une demande de solde pour le compte utilisateur (12).

10. Nœud informatique (10) selon la revendication 8, dans lequel les circuits de traitement (36) sont configurés pour exécuter les opérations de détermination, de traduction et de transmission en réponse à au moins un parmi : la chute du solde disponible à un niveau correspondant à une utilisation minimale de service facturable, ou un déclencheur périodique.

11. Nœud informatique (10) selon l'une quelconque des revendications 8-10, dans lequel, via les circuits de communication (30), les circuits de traitement (36) sont configurés pour transmettre les informations de solde vers un nœud de réseau (18) dans un réseau de communication (22) associé au fournisseur de services de communication (20).

12. Nœud informatique (10) selon l'une quelconque des revendications 8-11, dans lequel le service de communication comprend deux types de services de communication ou plus facturables au compte utilisateur, et
dans lequel les circuits de traitement (36) sont configurés pour traduire le solde disponible en traduisant le solde disponible en une quantité de service disponible correspondante pour chacun des deux types de services de communication ou plus, conformément à un plan tarifaire correspondant et à une unité d'intervalle de facturation correspondante pour chacun des deux types de services de communication ou plus, et
dans lequel les circuits de traitement (36) sont configurés pour transmettre les informations de solde en transmettant, via les circuits de communication (30), les quantités de service disponibles correspondantes pour chacun des deux types de services de communication ou plus.
